(19) Europäisches Patentamt
European Patent Office
Office européen des brevets

(11) **EP 2 657 907 A1**

(12) **EUROPEAN PATENT APPLICATION**

(43) Date of publication:
30.10.2013 Bulletin 2013/44

(51) Int Cl.:
*G06T 5/00* (2006.01)  *G06T 5/50* (2006.01)

(21) Application number: 13156939.4

(22) Date of filing: 27.02.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 27.04.2012 JP 2012102927
14.11.2012 JP 2012250329

(71) Applicant: Kabushiki Kaisha Toshiba
Tokyo 105-8001 (JP)

(72) Inventors:
• Yamada, Miki
Tokyo, 105-8001 (JP)
• Momonoi, Yoshiharu
Tokyo, 105-8001 (JP)
• Ono, Toshiyuki
Tokyo, 105-8001 (JP)
• Taguchi, Yasunori
Tokyo, 105-8001 (JP)

(74) Representative: HOFFMANN EITLE
Patent- und Rechtsanwälte
Arabellastrasse 4
81925 München (DE)

(54) **Image processing apparatus, image display apparatus, and image processing method**

(57) According to one embodiment, An image processing method includes: estimating a composition of image data, for each piece of image data received in a temporal order to calculate a reliability indicating likelihood of the composition estimated; determining whether the composition estimated is different from a composition previously used which is a composition to be used for image data previously received and whether the reliability is equal to or higher than a predetermined first threshold, and updating a composition to be used to the estimated composition when the estimated composition is different from the composition previously used and compositions having the reliability equal to or higher than the first threshold are received successively equal to or more than a predetermined first number of times; and calculating an intensity at which a sharpening process of the image data is performed based on the composition to be used.

FIG.1

## Description

FIELD

Embodiments described herein relate generally to an image processing apparatus, an image display apparatus, and an image processing method.

BACKGROUND

Conventionally known is a technology for realizing image processes that are suitable for a composition intended by a photographer, by estimating a composition of the entire image received, and applying different image processes to areas in the composition depending on the areas. With such a conventional technology, sharpness can also be adjusted for each of the areas in the composition.

However, when image frames are received sequentially, e.g., in the case of a video, because the composition of the entire image changes incrementally, it has been difficult to perform a sharpening process stably without making the image appear unnatural.

BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram illustrating a functional configuration of an image display apparatus according to a first embodiment;

FIG. 2 is an exemplary block diagram illustrating a functional configuration of a sharpening intensity calculator in the first embodiment;

FIG. 3 is an exemplary schematic diagram for explaining updating of a composition to be used performed by a scene determining module in the first embodiment;

FIG. 4 is an exemplary schematic diagram for explaining a smoothing process in the first embodiment;

FIG. 5 is an exemplary flowchart illustrating a sharpening intensity calculating process in the first embodiment;

FIG. 6 is an exemplary flowchart illustrating the sharpening intensity calculating process in the first embodiment;

FIG. 7 is an exemplary block diagram illustrating a functional configuration of a sharpening intensity calculator in a second embodiment;

FIG. 8 is an exemplary schematic diagram for explaining updating of a composition to be used performed by a scene determining module in the second embodiment; and

FIG. 9 is an exemplary flowchart illustrating a sharpening intensity calculating process in the second embodiment.

SUMMARY

To overcome the problems and achieve the object mentioned above, according to an embodiment, an image processing apparatus comprises: a composition estimating module configured to estimate a composition of image data, for each piece of image data received in a temporal order, and to calculate a reliability indicating likelihood of the composition estimated; a scene determining module configured to determine whether the composition estimated is different from a composition previously used which is a composition to be used for image data previously received and whether the reliability is equal to or higher than a predetermined first threshold, and to update a composition to be used to the estimated composition when the estimated composition is different from the composition previously used and compositions having the reliability equal to or higher than the first threshold are received successively equal to or more than a predetermined first number of times; an intensity calculator configured to calculate an intensity at which a sharpening process of the image data is performed based on the composition to be used; and a sharpening processor configured to perform the sharpening process of the image data at the intensity.

According to another embodiment of the invention, an image display apparatus comprises: a composition estimating module configured to estimate a composition of image data, for each piece of image data received in a temporal order, and to calculate a reliability indicating likelihood of the composition estimated; a scene determining module configured to determine whether the composition estimated is different from a composition previously used which is a composition to be used for image data previously received and whether the reliability is equal to or higher than a predetermined first threshold, and to update a composition to be used to the estimated composition when the estimated composition is different from the composition previously used and compositions having the reliability equal to or higher than the first threshold are received successively equal to or more than a predetermined first number of times; an intensity calculator configured to calculate an intensity at which a sharpening process of the image data is performed based on the composition to be used; and a sharpening processor configured to perform the sharpening process of the image data at the intensity; and a display module configured to display the image data applied with the sharpening process.

According to still another embodiment of the invention, an image processing method comprises: estimating a composition of image data, for each piece of image data received in a temporal order to calculate a reliability indicating likelihood of the composition estimated; determining whether the composition estimated is different from a composition previously used which is a composition to be used for image data previously received and whether the reliability is equal to or higher than a predetermined first threshold, and updating a composition to be used to the estimated composition when the estimated composition is different from the composition previously used and compositions having the reliability equal to or higher than the first threshold are received successively equal to or more than a predetermined first number of times; calculating an intensity at which a sharpening process of the image data is performed based on the composition to be used; and performing the sharpening process of the image data at the intensity.

DETAILED DESCRIPTION

First Embodiment

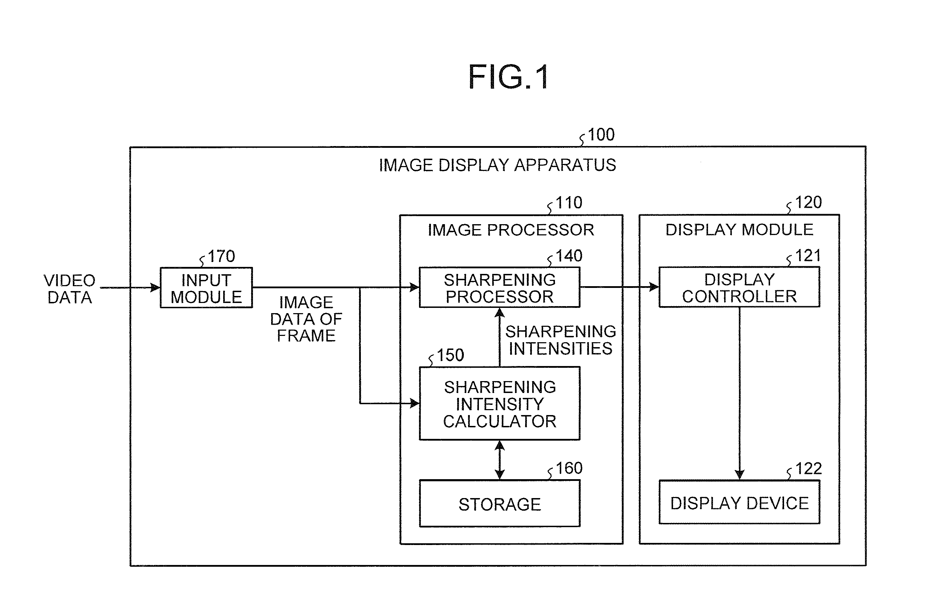

FIG. 1 is a block diagram illustrating a functional configuration of an image display apparatus according to a first embodiment. As illustrated in FIG. 1, an image display apparatus 100 according to the first embodiment mainly comprises an input module 170, an image processor 110, and a display module 120.

The input module 170 receives video data, and transmits image data of frames included in the video data to the image processor 110, one frame at a time. The input module 170 not only receives video data broadcasted over digital broadcasting and video data received over a network, but also receives video data recorded in a digital versatile disk (DVD) or a hard disk drive (HDD), as well as video data captured by an image capturing camera in real-time.

The image processor 110 sequentially receives the image data of the frames included in the received video data, and performs image processes such as sharpening to the image data of each of the frames sequentially received. At this time, the image processor 110 functions as an image processing apparatus.

The image processor 110 comprises a sharpening processor 140, a sharpening intensity calculator 150, and a storage 160, as illustrated in FIG. 1.

The storage 160 is a storage medium, such as an HDD or a memory storing therein various types of data. The sharpening intensity calculator 150 calculates a sharpening intensity indicating an amount of a sharpening process, that is, an intensity of the sharpening process. The sharpening intensity calculator 150 will be described later in detail.

The sharpening processor 140 performs a sharpening process to the image data received in units of a frame, at the sharpening intensity calculated by the sharpening intensity calculator 150. When the sharpening intensity is higher, an object in the image data is represented sharper. The sharpening processor 140 is capable of performing a sharpening process to each area  of the image data. Therefore, the sharpening process can be applied to each area using a different sharpening intensity.

The display module 120 displays the image data applied with the image processes by the image processor 110. The display module 120 comprises a display device 122 and a display controller 121. The display device 122 is a display device such as a display apparatus. The display controller 121 controls displaying of image data on the display device 122.

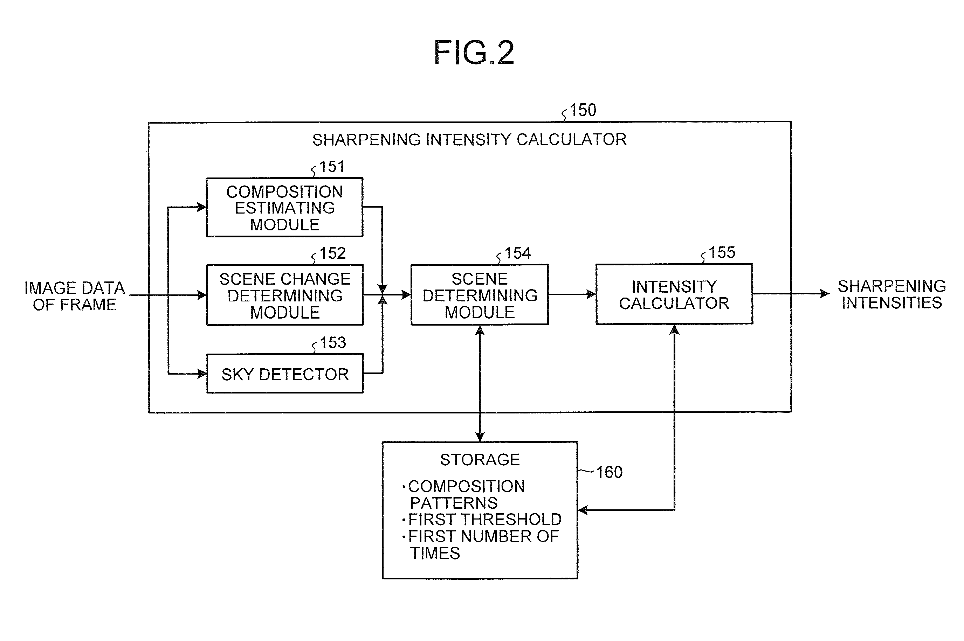

The sharpening intensity calculator 150 will now be explained. FIG. 2 is a block diagram illustrating a functional configuration of the sharpening intensity calculator 150 in the first embodiment. Data stored in the storage 160 is also illustrated in FIG. 2.

As illustrated in FIG. 2, composition patterns, a predetermined first threshold, and a predetermined first number of times are stored in the storage 160 in advance.

As illustrated in FIG. 2, the sharpening intensity calculator 150 comprises a composition estimating module 151, a scene change determining module 152, a sky detector 153, a scene determining module 154, and an intensity calculator 155.

The composition estimating module 151 estimates a composition of image data received as a current frame, based on the composition patterns stored in the storage 160. The composition patterns are patterns of a composition estimated from image data, and stored in the storage 160 in advance. The composition patterns include a landscape composition including a horizon, a landscape composition changing from a near view to a distant view in a direction from a left side toward a right side, and two-dimensional composition that is a two-dimensional composition other than landscapes.

The composition estimating module 151 estimates a composition of image data using the technique disclosed in Japanese Patent Application Laid-open No. 2012-15744, for example. The composition estimating module 151 also acquires an evaluation value. The composition estimating module 151 outputs the evaluation value acquired as a reliability indicating likelihood of the composition estimation, together with the estimated composition. The composition estimating module 151 then outputs the composition with the highest reliability, together with the reliability, to the scene determining module 154 as a latest composition.

A technique for estimating a composition is not limited thereto, and a composition of image data may be estimated and a reliability may be acquired in any way.

The scene change determining module 152 determines if there is any change in a scene (a scene change) in the received image data, compared with image data previously received, that is, the image data of a previous frame.

Specifically, the scene change determining module 152 calculates a statistic, such as an average luminance or a luminance variance, from the image data, and a distance between the statistics of image data of two successive frames. When the distance in the two frames exceeds a preset threshold, the scene change determining module 152 determines that there is a scene change.

For example, it is assumed that the average luminance and the luminance variance in the image data of a first frame are $Y_1$ and $s_1$, respectively, the average luminance and the luminance variance in the image data of a second frame are $Y_2$ and $s_2$, respectively, and the threshold is $\theta$. At this time, the scene change determining module 152 determines that a scene change occurs in the second frame when Equation (1) below is established.

$$(Y_1 - Y_2)^2 + (s_1 - s_2)^2 > \theta \qquad\qquad (1)$$

As another way for determining if there is a scene change, the scene change determining module 152 may use pixel values of a plurality of predetermined coordinates as they are, as statistics of image data of two successive frames.

As an example of pixel values, the scene change determining module 152 may calculate pixel values (luminance Y, color differences (U, V)) as a three-dimensional value, when image is a color image. The scene change determining module 152 may also determine the presence of a scene change by calculating a color histogram from the pixel values, and using a distance in the color histograms as the statistics.

A technique for determining the presence of a scene change is not limited thereto, and the presence of a scene change may be determined in any way.

The sky detector 153 determines if a sky is captured in the received image data, that is, if the sky is detected in the image data. Specifically, the sky detector 153 can determine if the sky is captured, using the average pixel value in the image data, for example. In other words, the sky detector 153 acquires pixel values of a typical sky in a color image represented by three components of luminance Y and color differences (U, V), and sets the pixel values of the sky as $Y_S$, $U_S$, $V_S$, in advance. The sky detector 153 then calculates an average pixel value in an upper area of the image data (e.g., an upper one third of the image data), and sets the average pixel value of the upper area as $Y_M$, $U_M$, $V_M$. The sky detector 153 can then determine that the sky is detected in the image data when following Equation (2) is established, using a threshold $\theta_S$.

$$(Y_M - Y_S)^2 + (U_M - U_S)^2 + (V_M - V_S)^2 < \theta_S \qquad\qquad (2)$$

A technique for detecting a sky is not limited thereto, and the sky may be detected in any way.

The scene determining module 154 determines if the latest composition estimated by the composition estimating module 151 based on the image data of the current frame is different from a previously used composition that is a composition with respect to image data of a previously received frame and used in the sharpening process of the previously received frame, and if the reliability is equal to or higher than the first threshold stored in the storage 160 in advance. The previously used composition is sequentially stored in a storage medium such as a memory, when the composition is set by the scene determining module 154.

If the latest composition estimated from the current frame is different from the previously used composition, and if a latest composition having a reliability equal to or higher than the first threshold is output successively in the number of times equal to or more than the first number of times stored in the storage 160, the scene determining module 154 updates a composition to be used in the sharpening process to the latest composition estimated from the current frame.

If the latest composition estimated from the image data of the frame currently being processed is the same as the previously used composition, or if a latest composition having a reliability equal to or higher than the first threshold is output successively in the number of times less than the first number of times, the scene determining module 154 keeps the previously used composition as the composition to be used in the sharpening process, without updating the composition to be used to the latest composition estimated from the current frame.

If the sky detector 153 determines that no sky is detected in the image data of the frame previously received but a sky is detected in the image data of the current frame, the scene determining module 154 updates the composition to be used in the sharpening process to the latest composition estimated from the image data of the current frame.

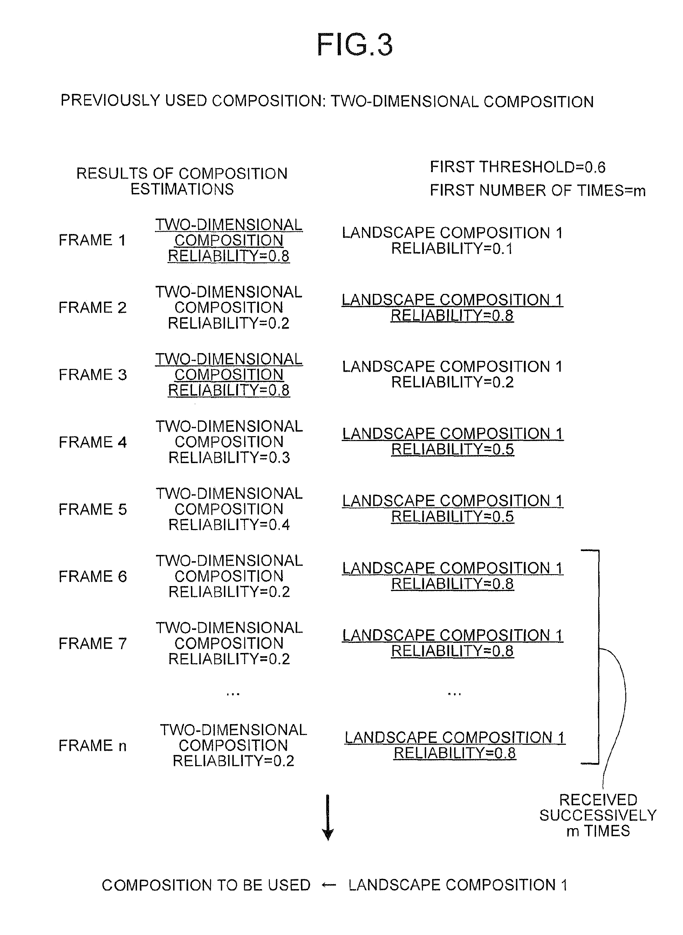

FIG. 3 is a schematic diagram for explaining how a composition to be used is updated by the scene determining module 154 in the first embodiment. In the example illustrated in FIG. 3, it is assumed that the previously used composition with respect to the image data of the previously received frame and used in the sharpening process of the previously received frame is a two-dimensional composition. In FIG. 3, a composition estimated by the composition estimating module 151 based on the current frame image is illustrated from a frame 1 in a temporal order.

In the exemplary results of the composition estimations performed by the composition estimating module 151 illustrated in FIG. 3, the composition estimating module 151 estimates either a two-dimensional composition or a landscape composition 1, and a reliability is calculated for each frame. The composition estimating module 151 outputs the composition with a higher reliability as the latest composition. In the composition estimation results illustrated in FIG. 3, the latest compositions are indicated as underlined. In the example illustrated in FIG. 3, the first threshold is set to 0.6, and the first number of times is set to m.

As illustrated in FIG. 3, for the frame 1, a two-dimensional composition with a reliability of 0.8 is set to be the latest composition. For the frame 2, the landscape composition 1 with a reliability of 0.8 is set to be the latest composition. For the frame 2, the latest composition is estimated to be the landscape composition, which is different from the previously used, two-dimensional composition, and the reliability is equal to or higher than the first threshold. In the following frame 3, however, the latest composition returns to the two-dimensional composition with a reliability of 0.8. Therefore, the composition to be used is not updated to the landscape composition 1 at this point in time.

For the frame 4 and the frame 5, the landscape composition 1 is output as the latest composition. The reliability is 0.5, which is less than the first threshold of 0.6. Therefore, the composition to be used is not updated to the landscape composition 1 at this point in time as well.

For the frame 6 and the following frames, the landscape composition 1 output as the latest composition is different from the previously used, two-dimensional composition. The reliability is 0.8, which is equal to or higher than the first threshold of 0.6. Furthermore, the number m of times at which a composition having a reliability equal to or higher than the first threshold of 0.6 is received is the first number of times. Therefore, the scene determining module 154 determines the composition to be used at the point of output of the frame n to be the landscape composition 1.

Referring back to FIG. 2, the intensity calculator 155 calculates an intensity at which a sharpening process is applied to the image data, based on the composition to be used determined by the scene determining module 154. Specifically, the intensity calculator 155 acquires depth data by causing the composition estimating module 151 to estimate the composition of image data with the technique disclosed in Japanese Patent Application Laid-open No. 2012-15744, and assigns the depth data thus acquired to the sharpening intensity. At this time, the intensity calculator 155 calculates a low sharpening intensity for a distant view area (an area more distant in the depth direction) and calculates a high sharpening intensity for a near view area (an area closer to the front side in the depth direction), for areas included in the composition of the image data. A sharpening process with a feel of depth can then be performed using the sharpening intensities thus acquired.

The intensity calculator 155 performs a smoothing process of the sharpening intensities thus calculated, based on the sharpening intensities thus calculated and previous sharpening intensities that are sharpening intensities calculated for the image data of the previous frame that is received previously.

Specifically, to perform a smoothing process of the sharpening intensities, the intensity calculator 155 calculates a weight coefficient based on a change in an composition to be used with respect to a previously used composition, and performs a weighted addition of a calculated sharpening intensity and a previous sharpening intensity using the weight coefficient.

For example, the intensity calculator 155 performs a smoothing process of the sharpening intensities in the manner described below. Hereinafter, a sharpening intensity calculated for image data of a current frame is referred to as a current sharpening intensity (initial value). The current sharpening intensity applied with the smoothing process is then used in the sharpening process of the image data of the current frame.

To calculate the current sharpening intensity $x_N$ applied with the smoothing process, the intensity calculator 155 performs a smoothing process using Equation (3) below. Where, $x_{N0}$ is a current sharpening intensity (initial value), $x_P$ is a previous sharpening intensity, $m_N$ is a weight coefficient for the current sharpening intensity, and $m_P$ is a weight coefficient for the previous sharpening intensity.

$$x_N = m_N * x_{N0} + m_P * x_P \qquad\qquad (3)$$

Where, "x" is a multiplication. The intensity calculator 155 calculates Equation (3) for each pixel included in the image data, to calculate a sharpening intensity map representing the sharpening intensities for all of the pixels included in the image data. After calculating Equation (3) and before processing the following frame, the intensity calculator 155 assigns the current sharpening intensities $x_N$ applied with the smoothing process to the previous sharpening intensities $x_P$, in the manner indicated in Equation (4) below.

$$x_P = x_N \qquad\qquad (4)$$

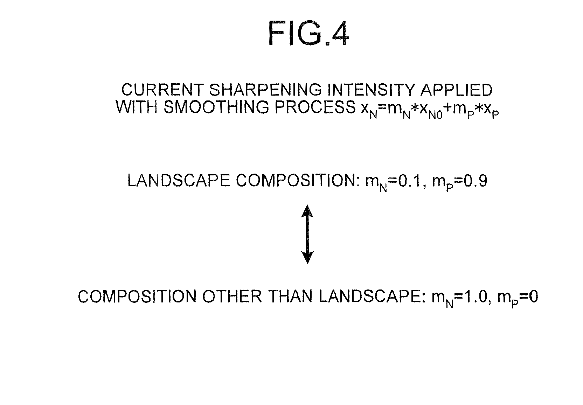

FIG. 4 is a schematic diagram for explaining the smoothing process. As illustrated in FIG. 4, the intensity calculator 155 sets $m_N=0.1$, $m_P=0.9$, for example, as the weight coefficients, when the estimated composition is a landscape composition. In this manner, the sharpening processor 140 is enabled to perform a process in which the sharpening intensities are changed relatively smoothly. When the composition of image data changes from a landscape composition to a composition other than a landscape, the intensity calculator 155 changes the weight coefficients and sets $m_N=1.0$, $m_P=0.0$, and uses the current sharpening intensities (initial values) as they are, without using the previous sharpening intensities. In this manner, a process can be performed well.

The intensity calculator 155 then outputs the current sharpening intensities applied with the smoothing process to the sharpening processor 140.

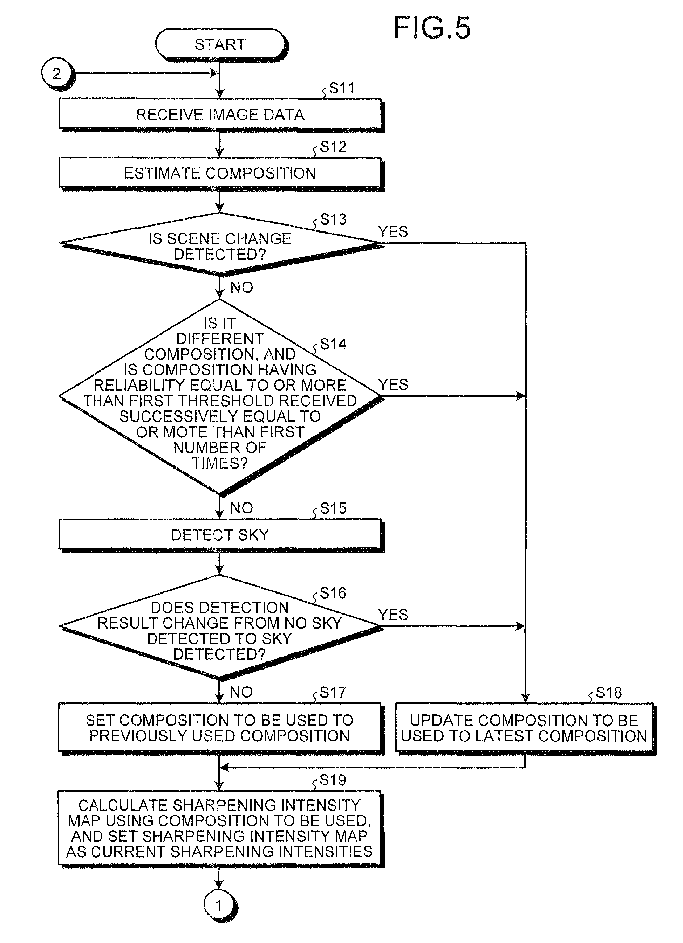

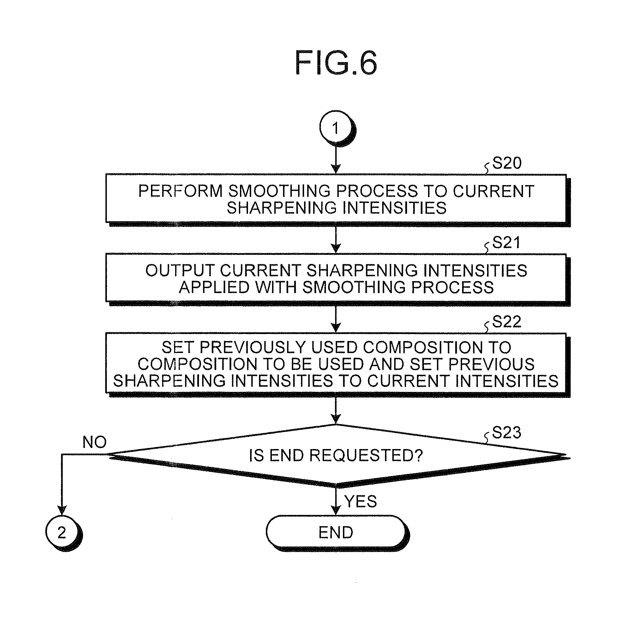

The sharpening intensity calculating process performed by the sharpening intensity calculator 150 according to the first embodiment having such a configuration will now be explained. FIGS. 5 and 6 are flowcharts illustrating the sharpening intensity calculating process in the first embodiment.

To begin with, each of the composition estimating module 151, the scene change determining module 152, and the sky detector 153 receives image data, one frame at a time (S11). The composition estimating module 151 then estimates the composition of the image data of a current frame received (S12). The composition estimating module 151 then outputs a latest composition and a reliability.

The scene change determining module 152 determines if a scene change is detected in the image data of the current frame received (S13). If a scene change is detected (Yes at S13), the scene determining module 154 updates the composition to be used in the sharpening process of the image data representing the current frame to the latest composition (S18).

By contrast, if no scene change is detected at S13 (No at S13), the scene determining module 154 determines if the latest composition is a composition that is different from the previously used composition used in the sharpening process performed to the image data of the frame received previously, and if a composition with a reliability equal to or higher than the first threshold is received successively in the first number of times or more, based on the latest composition and the reliability of the latest composition output from the composition estimating module 151 at S12 (S14).

If the latest composition is a composition that is different from the previously used composition, and a composition having a reliability equal to or higher than the first threshold is received successively in the first number of times or more (Yes at S14), the scene determining module 154 updates the composition to be used to the latest composition (S18).

By contrast, if the latest composition is a composition that is the same as the previously used composition, or if a composition having a reliability equal to or higher than the first threshold is not received successively more than first number of times at S14 (No at S14), the sky detector 153 detects a sky in the received image data representing the current frame in the manner described above (S15). The scene determining module 154 then determines if a detection result changes from no sky detected to a sky detected, between the image data of the previous frame and the image data of the current frame (S16).

If the detection result of no sky detected changes to a result of a sky detected between the image data of the previous frame and the image data of the current frame (Yes at S16), the scene determining module 154 updates the composition to be used to the latest composition (S18).

The reason why a sky detection is performed and the composition to be used is updated to the latest composition based on the detection result is to complement the result of a composition estimation. In this manner, accuracy is improved.

If the detection result of no sky detected does not change to a result of a sky detected between the image data of the previous frame and the image data of the current frame at S16 (No at S16), the previously used composition is kept specified as the composition to be used (S17).

The intensity calculator 155 then acquires a sharpening intensity map by calculating the sharpening intensity for each pixel included in the image data based on the composition, and sets the sharpening intensity map thus acquired as the current sharpening intensities (S19).

The intensity calculator 155 then performs the smoothing process of the current sharpening intensities in the manner described above (S20). The intensity calculator 155 then outputs the current sharpening intensities applied with the smoothing process to the sharpening processor 140 (S21).

The sharpening intensity calculator 150 then sets the previously used composition to the composition to be used, and sets the previous sharpening intensities applied with the smoothing process to the current sharpening intensities (S22). The sharpening intensity calculator 150 then determines if a predetermined ending instruction is issued (S23). If the ending instruction is not issued (No at S23), the system control returns  to S11. The image data of the next frame is then received, and the processes from S12 to S22 are repeated.

By contrast, if the ending instruction is issued at S23 (No at S23), the process is ended. In this manner, the sharpening processor 140 applies the sharpening process to the image data using the sharpening intensities to be used calculated by the intensity calculator 155. The display controller 121 then displays the image data applied with the sharpening process on the display device 122.

In the manner described above, in the first embodiment, even if a scene change is not detected in received image data, as long as the latest composition estimated by the composition estimating module 151 is a composition different from the previously used composition and a composition having a reliability equal to or higher than the first threshold is received successively equal to or more than the first number of times, the scene determining module 154 updates the composition to be used to the latest composition. The intensity calculator 155 then calculates the sharpening intensities based on the latest composition, and the sharpening processor 140 performs the sharpening process using the sharpening intensities thus calculated. Therefore, a stable sharpening process can be provided to video data without making the video data appear unnatural.

Furthermore, in the first embodiment, before performing the sharpening process, a smoothing process is applied to the sharpening intensities thus calculated using the sharpening intensities thus calculated and the previous sharpening intensities that are the sharpening intensities used for the image data of the frame received previously, based on a change in the compositions. Therefore, a more stable sharpening process can be provided to video data, without making the video data appear unnatural.

Second Embodiment

In the first embodiment, the composition to be used is updated to the latest composition when the latest composition is  a composition different from the previously used composition and a composition having a reliability equal to or higher than the first threshold is received equal to or more than the first number of times. In a second embodiment, the composition to be used is updated to the latest composition when a piece of image data having a used composition reliability, which is a reliability of the previously used composition with respect to the piece of image data of a current frame, less than a second threshold is received successively equal to or more than a second number of times.

The functional configuration of an image display apparatus according to the second embodiment is the same as that according to the first embodiment. In the second embodiment, the configuration and the function of the sharpening intensity calculator are different from those in the first embodiment.

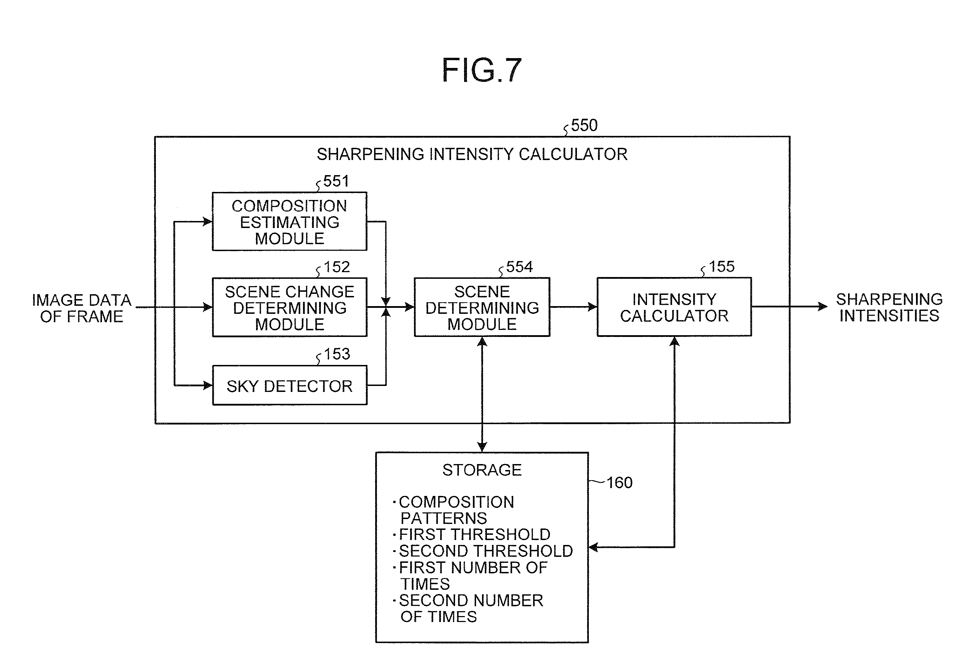

FIG. 7 is a block diagram illustrating a functional configuration of a sharpening intensity calculator 550 in the second embodiment. Data stored in the storage 160 is also illustrated in FIG. 7.

As illustrated in FIG. 2, the storage 160 not only stores therein composition patterns, a predetermined first threshold, and a predetermined first number of times in advance, in the same manner as in the first embodiment, but also stores therein a predetermined second threshold and a predetermined second number of times in advance. The second threshold herein is a value smaller than the first threshold.

As illustrated in FIG. 7, the sharpening intensity calculator 550 according to the second embodiment comprises the composition estimating module 151, the scene change determining module 152, the sky detector 153, a scene determining module 554, and the intensity calculator 155. The functions of the scene change determining module 152, the sky detector 153, and the intensity calculator 155 are the same as those in the first embodiment.

Similarly to the first embodiment, a composition estimating module 551 according to the second embodiment acquires a  reliability by estimating a composition of image data received as a current frame to set the composition having the greatest reliability as a latest composition. Furthermore, the composition estimating module 551 calculates the used composition reliability, which is a reliability of the previously used composition with respect to a piece of image data of a current frame.

The scene determining module 554 according to the second embodiment determines if the latest composition estimated by the composition estimating module 551 based on the current frame is different from the previously used composition, and if a reliability is equal to or higher than the first threshold stored in advance in the storage 160, in the same manner as in the first embodiment. If the latest composition is different from the previously used composition and a latest composition having a reliability equal to or higher than the first threshold is output successively equal to or more than the first number of times stored in the storage 160, the scene determining module 554 updates the composition to be used in the sharpening process to the latest composition estimated from the current frame.

The scene determining module 554 according to the second embodiment further determines if the used composition reliability is less than the second threshold stored in the storage 160. If pieces of image data each having the used composition reliability less than the second threshold are received successively equal to or more than the second number of times stored in the storage 160, the composition to be used is updated to the latest composition.

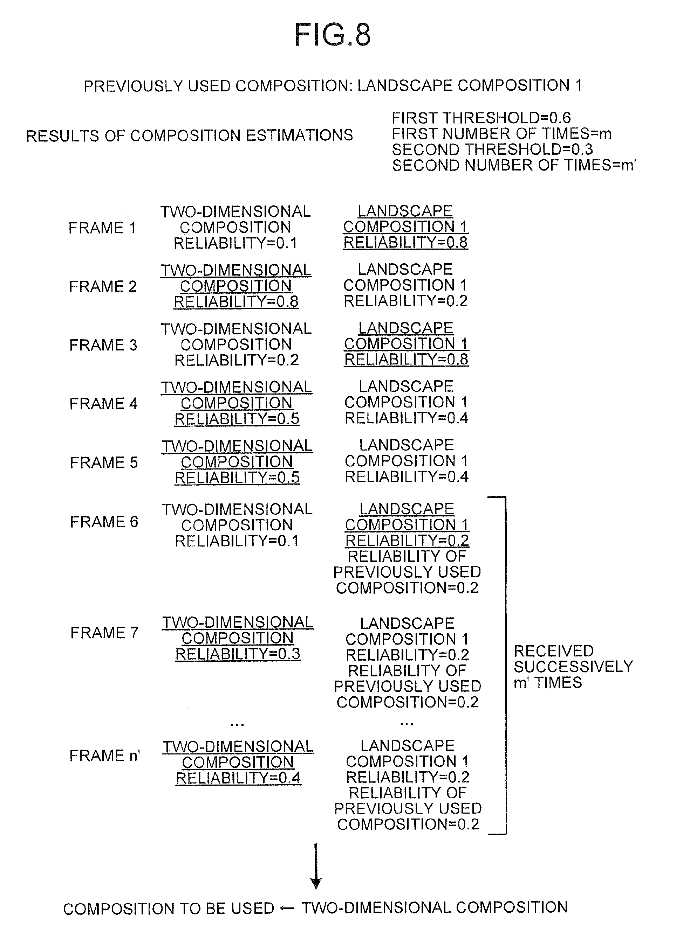

FIG. 8 is an exemplary schematic diagram for explaining updating of a composition to be used performed by the scene determining module 554 in the second embodiment. In the example illustrated in FIG. 8, it is assumed that the composition previously used which is the composition to be used with respect to the image data of the previously received frame is a landscape composition 1. In FIG. 8, compositions estimated by the composition estimating module 551 with respect to the image of current frame are illustrated from the frame 1 in a temporal order.

In the example illustrated in FIG. 8, in the results of the composition estimations performed by the composition estimating module 551, the composition estimating module 551 calculates the respective reliability of both a two-dimensional composition or a landscape composition 1. The composition estimating module 551 outputs the composition with a higher reliability as the latest composition. In the composition estimation results illustrated in FIG. 8, the latest compositions are indicated as underlined. In the example illustrated in FIG. 8, the first threshold is set to 0.6, the first number of times is set to m, a second threshold is set to 0.3, and a second number of times is set to m'.

As illustrated in FIG. 8, for the frame 1, a landscape composition 1 with a reliability of 0.8 is set to be the latest composition. For the frame 2, the two-dimensional composition with a reliability of 0.8 is set to be the latest composition. For the frame 2, the latest composition is estimated to be the two-dimensional composition, which is different from the landscape composition 1 which is the previously used composition, and the reliability is equal to or higher than the first threshold. In the following frame 3, however, the latest composition returns to the landscape composition 1 with a reliability of 0.8. Therefore, at this point in time, the composition to be used is not updated to the two-dimensional composition.

For the frame 4 and the frame 5, the two-dimensional composition is output as the latest composition. The reliability is 0.5, which is less than the first threshold of 0.6. Therefore, at this point in time as well, the composition to be used is not updated to the two-dimensional composition.

For the frame 6 and the following frames, the reliability of the landscape composition 1 which is the previously used composition (the used composition reliability) is 0.2 which is less than the second threshold of 0.3. Furthermore, the successive number m' of times is the second number of times. Therefore, at the point of output of the frame n', the scene determining module 154 determines the composition to be used, to be the two-dimensional composition which is the latest composition.

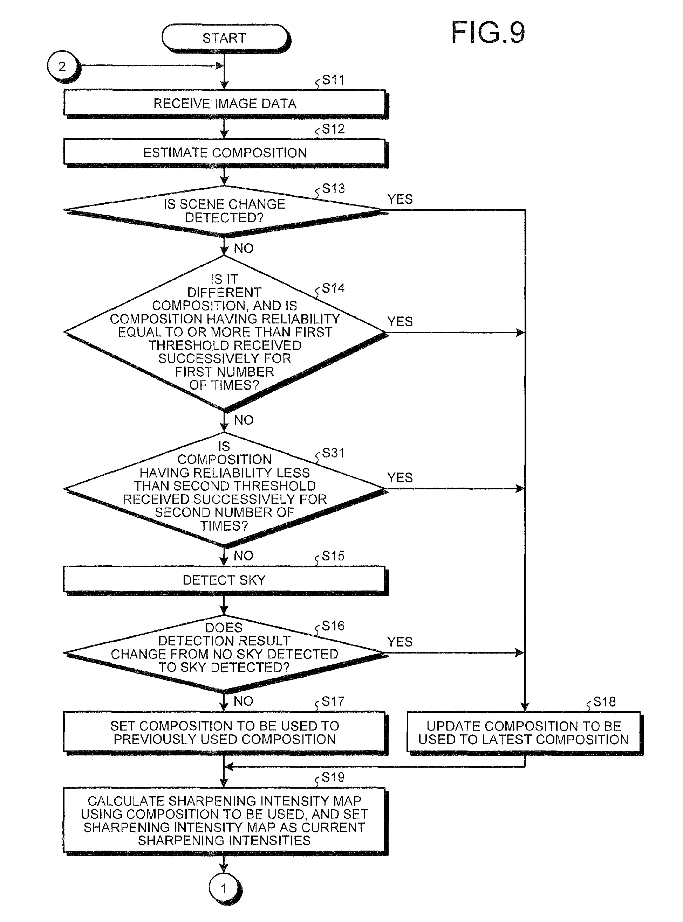

A sharpening intensity calculating process performed by the sharpening intensity calculator 550 according to the second embodiment having such a configuration will now be explained. FIG. 9 is a flowchart illustrating the sharpening intensity calculating process in the second embodiment.

Executed in the same manner as in the first embodiment the process from the step at which each of the composition estimating module 551, the scene change determining module 152, and the sky detector 153 receives the image data, one frame at a time, to the step at which the scene determining module 154 determines if the latest composition is a composition different from the composition previously used for the image data of the frame received previously, and if a latest composition having a reliability equal to or higher than the first threshold is received successively equal to or more than the first number of times (S11 to S14).

If the latest composition has the same composition as the previously used composition, or a composition having a reliability equal to or higher than the first threshold is not received successively equal to or more than the first number of times at S14 (No at S14), the scene determining module 554 further determines if pieces of image data having a used composition reliability less than the second threshold are received successively equal to or more than the second number of times (S31). If pieces of image having a used composition reliability less than the second threshold are received successively equal to or more than the second number of times (Yes at S31), the scene determining module 554 updates the composition to be used to the latest composition (S18).

If pieces of image data having a used composition reliability less than the second threshold are not received successively equal to or more than the second number of times at S31 (No at S31), the sky detector 153 performs the sky detection in the received image data of the current frame (S15). The steps thereafter are the same as those in the first embodiment.

In the manner described above, in the second embodiment, if the latest composition is different from the previously used composition, it does not occur that compositions having a reliability equal to or higher than the first threshold are received successively equal to or more than the first number of times, and if pieces of image data having a used composition reliability less than the second threshold are received successively equal to or more than the second number of times, the scene determining module 554 updates the composition to be used to the latest composition. Therefore, a more stable sharpening process can be provided to video data more accurately, without making the video data appear unnatural.

The image processing program executed on the image display apparatus 100 according to the embodiments is provided in a manner incorporated in a read only memory (ROM) or the like in advance.

The image processing program executed on the image display apparatus 100 according to the embodiments may also be configured to be provided in a manner recorded in a computer-readable recording medium such as a compact disk read-only memory (CD-ROM), a flexible disk (FD), a CD recordable (CD-R), and a DVD as a file in an installable or executable format.

Furthermore, the image processing program executed on the image display apparatus 100 according to the embodiments may be stored in a computer connected to a network such as the Internet, and may be made available for downloads over the network. Alternatively, the image processing program executed on the image display apparatus 100 according to the embodiments may be provided or distributed over a network such as the Internet.

The image processing program executed on the image display apparatus 100 according to the embodiments has a modular structure including each module explained above (the composition estimating module 151, 551, the scene change determining module 152, the sky detector 153, the scene determining modules 154 and 554, the intensity calculator 155, the sharpening processor 140, and the like). As actual hardware, for example, by causing a central processing unit (CPU) (processor) to read the image processing program from the ROM and to execute the image processing program, each of the composition estimating module 151, 551, the scene change determining module 152, the sky detector 153, the scene determining modules 154 and 554, the intensity calculator 155, the sharpening processor 140, and the like is loaded onto the main memory, and is generated on the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  An image processing apparatus (110) comprising:

    a composition estimating module (151) configured to estimate a composition of image data, for each piece of image data received in a temporal order, and to calculate a reliability indicating likelihood of the composition estimated;
    a scene determining module (154, 554) configured to determine whether the composition estimated is different from a composition previously used which is a composition to be used for image data previously received and whether the reliability is equal to or higher than a predetermined first threshold, and to update a composition to be used to the estimated composition when the estimated composition is different from the composition previously used and compositions having the reliability equal to or higher than the first threshold are received successively equal to or more than a predetermined first number of times;
    an intensity calculator (155) configured to calculate an intensity at which a sharpening process of the image data is performed based on the composition to be used; and
    a sharpening processor (140) configured to perform the sharpening process of the image data at the intensity.

2.  The apparatus (110) of Claim 1, further comprising a sky determining module (153) configured to determine whether an image of sky is included in the image data when the estimated composition is a same as the composition previously used or compositions having the reliability equal to or higher than the predetermined first threshold are not received successively equal to or more than the first number of times, wherein
    the scene determining module (154, 554) is configured to update the composition to be used to the estimated composition when it is determined that any image of a sky is not included in the image data previously received and an image of a sky is included in the image data.

3.  The apparatus (110) of Claim 1 or 2, wherein
    the composition estimating module (151) is configured to further calculate a used composition reliability which is the reliability of the composition previously used for the image data currently received,

when the estimated composition is a same as the previously used composition, or compositions having the reliability of the estimated composition equal to or higher than the predetermined first threshold are not received successively equal to or more than the predetermined first number of times, the scene determining module (554) is configured to further determine whether the used composition reliability is less than a predetermined second threshold, and to update the composition to be used to the estimated composition when image data having the used composition reliability less than the second threshold are received successively equal to or more than a predetermined second number of times.

4. The apparatus (110) of Claim 1, wherein
the intensity calculator (155) is configured to perform a smoothing process of the calculated intensity, based on the calculated intensity and a previous intensity that is an intensity calculated for the image data previously received, and the sharpening processor (140) is configured to perform the sharpening process of the image data at the intensity applied with the smoothing process.

5. The apparatus (110) of Claim 4, wherein the intensity calculator (155) is configured to calculate a weight coefficient based on a change from the composition previously used to the composition to be used, and to perform a smoothing process of the intensity by performing a weighted addition to the intensity and the previous intensity using the weight coefficient calculated.

6. The apparatus (110) of Claim 1, wherein the intensity calculator (155) is configured to calculate the intensity lower for a distant view area in the composition and to calculate the intensity higher for a near view area in the composition.

7. An image display apparatus (100) comprising:

a composition estimating module (151) configured to estimate a composition of image data, for each piece of image data received in a temporal order, and to calculate a reliability indicating likelihood of the composition estimated;
a scene determining module (154, 554) configured to determine whether the composition estimated is different from a composition previously used which is a composition to be used for image data previously received and whether the reliability is equal to or higher than a predetermined first threshold, and to update a composition to be used to the estimated composition when the estimated composition is different from the composition previously used and compositions having the reliability equal to or higher than the first threshold are received successively equal to or more than a predetermined first number of times;
an intensity calculator (155) configured to calculate an intensity at which a sharpening process of the image data is performed based on the composition to be used;
a sharpening processor (140) configured to perform the sharpening process of the image data at the intensity; and
a display module (120) configured to display the image data applied with the sharpening process.

8. An image processing method comprising:

estimating a composition of image data, for each piece of image data received in a temporal order to calculate a reliability indicating likelihood of the composition estimated;
determining whether the composition estimated is different from a composition previously used which is a composition to be used for image data previously received and whether the reliability is equal to or higher than a predetermined first threshold, and updating a composition to be used to the estimated composition when the estimated composition is different from the composition previously used and compositions having the reliability equal to or higher than the first threshold are received successively equal to or more than a predetermined first number of times;
calculating an intensity at which a sharpening process of the image data is performed based on the composition to be used; and
performing the sharpening process of the image data at the intensity.

# FIG.1

$\varsigma$100

**IMAGE DISPLAY APPARATUS**

$\varsigma$110
**IMAGE PROCESSOR**

$\varsigma$120
**DISPLAY MODULE**

$\varsigma$170
**INPUT MODULE**

VIDEO DATA

IMAGE DATA OF FRAME

$\varsigma$140
**SHARPENING PROCESSOR**

$\varsigma$121
**DISPLAY CONTROLLER**

SHARPENING INTENSITIES

$\varsigma$150
**SHARPENING INTENSITY CALCULATOR**

$\varsigma$160
**STORAGE**

$\varsigma$122
**DISPLAY DEVICE**

# FIG.2

EP 2 657 907 A1

# FIG.3

PREVIOUSLY USED COMPOSITION: TWO-DIMENSIONAL COMPOSITION

| RESULTS OF COMPOSITION ESTIMATIONS | | FIRST THRESHOLD=0.6 FIRST NUMBER OF TIMES=m |
|---|---|---|
| FRAME 1 | TWO-DIMENSIONAL COMPOSITION RELIABILITY=0.8 | LANDSCAPE COMPOSITION 1 RELIABILITY=0.1 |
| FRAME 2 | TWO-DIMENSIONAL COMPOSITION RELIABILITY=0.2 | LANDSCAPE COMPOSITION 1 RELIABILITY=0.8 |
| FRAME 3 | TWO-DIMENSIONAL COMPOSITION RELIABILITY=0.8 | LANDSCAPE COMPOSITION 1 RELIABILITY=0.2 |
| FRAME 4 | TWO-DIMENSIONAL COMPOSITION RELIABILITY=0.3 | LANDSCAPE COMPOSITION 1 RELIABILITY=0.5 |
| FRAME 5 | TWO-DIMENSIONAL COMPOSITION RELIABILITY=0.4 | LANDSCAPE COMPOSITION 1 RELIABILITY=0.5 |
| FRAME 6 | TWO-DIMENSIONAL COMPOSITION RELIABILITY=0.2 | LANDSCAPE COMPOSITION 1 RELIABILITY=0.8 |
| FRAME 7 | TWO-DIMENSIONAL COMPOSITION RELIABILITY=0.2 | LANDSCAPE COMPOSITION 1 RELIABILITY=0.8 |
| | ... | ... |
| FRAME n | TWO-DIMENSIONAL COMPOSITION RELIABILITY=0.2 | LANDSCAPE COMPOSITION 1 RELIABILITY=0.8 |

RECEIVED SUCCESSIVELY m TIMES

COMPOSITION TO BE USED ← LANDSCAPE COMPOSITION 1

13

# FIG.4

CURRENT SHARPENING INTENSITY APPLIED
WITH SMOOTHING PROCESS $x_N = m_N * x_{N0} + m_P * x_P$

LANDSCAPE COMPOSITION: $m_N = 0.1$, $m_P = 0.9$

$\updownarrow$

COMPOSITION OTHER THAN LANDSCAPE: $m_N = 1.0$, $m_P = 0$

# FIG.5

START

② → S11
RECEIVE IMAGE DATA

S12
ESTIMATE COMPOSITION

S13
IS SCENE CHANGE DETECTED? — YES →

NO ↓

S14
IS IT DIFFERENT COMPOSITION, AND IS COMPOSITION HAVING RELIABILITY EQUAL TO OR MORE THAN FIRST THRESHOLD RECEIVED SUCCESSIVELY EQUAL TO OR MOTE THAN FIRST NUMBER OF TIMES? — YES →

NO ↓ S15
DETECT SKY

S16
DOES DETECTION RESULT CHANGE FROM NO SKY DETECTED TO SKY DETECTED? — YES →

NO ↓ S17
SET COMPOSITION TO BE USED TO PREVIOUSLY USED COMPOSITION

S18
UPDATE COMPOSITION TO BE USED TO LATEST COMPOSITION

S19
CALCULATE SHARPENING INTENSITY MAP USING COMPOSITION TO BE USED, AND SET SHARPENING INTENSITY MAP AS CURRENT SHARPENING INTENSITIES

①

# FIG.6

① 

**S20**
PERFORM SMOOTHING PROCESS TO CURRENT
SHARPENING INTENSITIES

**S21**
OUTPUT CURRENT SHARPENING INTENSITIES
APPLIED WITH SMOOTHING PROCESS

**S22**
SET PREVIOUSLY USED COMPOSITION TO
COMPOSITION TO BE USED AND SET PREVIOUS
SHARPENING INTENSITIES TO CURRENT INTENSITIES

**S23**
NO ⟵ IS END REQUESTED? 
② 

YES

END

# FIG.7

SHARPENING INTENSITY CALCULATOR — 550

COMPOSITION ESTIMATING MODULE — 551

SCENE CHANGE DETERMINING MODULE — 152

SKY DETECTOR — 153

SCENE DETERMINING MODULE — 554

INTENSITY CALCULATOR — 155

IMAGE DATA OF FRAME

SHARPENING INTENSITIES

STORAGE — 160

- COMPOSITION PATTERNS
- FIRST THRESHOLD
- SECOND THRESHOLD
- FIRST NUMBER OF TIMES
- SECOND NUMBER OF TIMES

# FIG.8

PREVIOUSLY USED COMPOSITION: LANDSCAPE COMPOSITION 1

RESULTS OF COMPOSITION ESTIMATIONS

FIRST THRESHOLD=0.6
FIRST NUMBER OF TIMES=m
SECOND THRESHOLD=0.3
SECOND NUMBER OF TIMES=m'

FRAME 1
TWO-DIMENSIONAL COMPOSITION RELIABILITY=0.1
LANDSCAPE COMPOSITION 1 RELIABILITY=0.8

FRAME 2
TWO-DIMENSIONAL COMPOSITION RELIABILITY=0.8
LANDSCAPE COMPOSITION 1 RELIABILITY=0.2

FRAME 3
TWO-DIMENSIONAL COMPOSITION RELIABILITY=0.2
LANDSCAPE COMPOSITION 1 RELIABILITY=0.8

FRAME 4
TWO-DIMENSIONAL COMPOSITION RELIABILITY=0.5
LANDSCAPE COMPOSITION 1 RELIABILITY=0.4

FRAME 5
TWO-DIMENSIONAL COMPOSITION RELIABILITY=0.5
LANDSCAPE COMPOSITION 1 RELIABILITY=0.4

FRAME 6
TWO-DIMENSIONAL COMPOSITION RELIABILITY=0.1
LANDSCAPE COMPOSITION 1 RELIABILITY=0.2 RELIABILITY OF PREVIOUSLY USED COMPOSITION=0.2

FRAME 7
TWO-DIMENSIONAL COMPOSITION RELIABILITY=0.3
LANDSCAPE COMPOSITION 1 RELIABILITY=0.2 RELIABILITY OF PREVIOUSLY USED COMPOSITION=0.2

...     ...

FRAME n'
TWO-DIMENSIONAL COMPOSITION RELIABILITY=0.4
LANDSCAPE COMPOSITION 1 RELIABILITY=0.2 RELIABILITY OF PREVIOUSLY USED COMPOSITION=0.2

RECEIVED SUCCESSIVELY m' TIMES

COMPOSITION TO BE USED ← TWO-DIMENSIONAL COMPOSITION

**FIG.9**

```
                    ( START )
   (2) ─────────────────┐
                         ▼                    ⌐S11
              ┌──────────────────────────────┐
              │      RECEIVE IMAGE DATA       │
              └──────────────────────────────┘
                         │                    ⌐S12
                         ▼
              ┌──────────────────────────────┐
              │      ESTIMATE COMPOSITION     │
              └──────────────────────────────┘
                         │              ⌐S13
                         ▼                        YES
              ◇ IS SCENE CHANGE ◇ ──────────────────────┐
                 DETECTED?                               │
                         │ NO                            │
                         ▼                               │
                       IS IT                             │
                    DIFFERENT                            │
              ◇ COMPOSITION, AND IS ◇  ⌐S14              │
              COMPOSITION HAVING RELIABILITY   YES       │
              EQUAL TO OR MORE THAN FIRST ─────────────►│
                 THRESHOLD RECEIVED                      │
                  SUCCESSIVELY FOR                       │
                   FIRST NUMBER                          │
                    OF TIMES?                            │
                         │ NO                            │
                         ▼                               │
                       IS                                │
                  COMPOSITION        ⌐S31               │
              ◇ HAVING RELIABILITY LESS ◇                │
              THAN SECOND THRESHOLD        YES           │
              RECEIVED SUCCESSIVELY FOR ──────────────►│
               SECOND NUMBER OF                         │
                    TIMES?                              │
                         │ NO           ⌐S15           │
                         ▼                             │
              ┌──────────────────────────────┐        │
              │          DETECT SKY          │         │
              └──────────────────────────────┘        │
                         │                             │
                         ▼          ⌐S16              │
                       DOES                            │
                 DETECTION RESULT          YES         │
              ◇ CHANGE FROM NO SKY DETECTED ◇ ────────►│
                  TO SKY DETECTED?                     │
                         │ NO       ⌐S17              │
                         ▼                       ⌐S18
   ┌──────────────────────────────┐   ┌──────────────────────────────┐
   │  SET COMPOSITION TO BE USED TO │  │  UPDATE COMPOSITION TO BE     │
   │  PREVIOUSLY USED COMPOSITION   │  │  USED TO LATEST COMPOSITION   │
   └──────────────────────────────┘   └──────────────────────────────┘
                         │◄─────────────────────────────┘
                         ▼          ⌐S19
   ┌──────────────────────────────────────────┐
   │  CALCULATE SHARPENING INTENSITY MAP        │
   │  USING COMPOSITION TO BE USED, AND SET     │
   │  SHARPENING INTENSITY MAP AS CURRENT       │
   │  SHARPENING INTENSITIES                     │
   └──────────────────────────────────────────┘
                         │
                         ▼
                        (1)
```

Europäisches
Patentamt

European
Patent Office

Office européen
des brevets

# EUROPEAN SEARCH REPORT

Application Number

EP 13 15 6939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | VLADIMIR LACHINE ET AL: "Content adaptive enhancement of video images", PROCEEDINGS OF SPIE, vol. 8517, 15 October 2012 (2012-10-15), pages 84991M-84991M-9, XP055047895, ISSN: 0277-786X, DOI: 10.1117/12.930528 * the whole document * ----- | 1-8 | INV. G06T5/00 G06T5/50 |
| A | ZAFARIFAR NXP RESEARCH (NETHERLANDS) B ET AL: "Horizon detection based on sky-color and edge features", VISUAL COMMUNICATIONS AND IMAGE PROCESSING; 29-1-2008 - 31-1-2008; SAN JOSE,, 29 January 2008 (2008-01-29), XP030081250, * abstract * * page 1, last paragraph * * page 4, paragraph 3 - paragraph 4 * * page 5, last paragraph * ----- | 1-8 | |
| | | | TECHNICAL FIELDS SEARCHED (IPC) |
| | | | G06T G06K H04N |

The present search report has been drawn up for all claims

| Place of search | Date of completion of the search | Examiner |
|---|---|---|
| Munich | 19 August 2013 | Turina, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012015744 A